## Europäisches Patentamt
## European Patent Office
## Office européen des brevets

(19)

(11) Numéro de publication: **0 165 842**
**B1**

(12) **FASCICULE DE BREVET EUROPEEN**

(45) Date de publication du fascicule du brevet:
**09.03.88**

(51) Int. Cl.⁴: **G 02 B 6/04,** B 29 D 11/00

(21) Numéro de dépôt: **85400966.9**

(22) Date de dépôt: **15.05.85**

(54) **Procédé de réalisation d'un conduit de lumière multipoints.**

(30) Priorité: **23.05.84 FR 8408058**

(43) Date de publication de la demande:
**27.12.85 Bulletin 85/52**

(45) Mention de la délivrance du brevet:
**09.03.88 Bulletin 88/10**

(84) Etats contractants désignés:
**DE GB IT SE**

(56) Documents cités:
**EP - A - 0 108 420**
**DE - A - 2 132 047**
**FR - A - 2 533 709**
**GB - A - 924 774**

**PATENTS ABSTRACTS OF JAPAN, vol. 7, no. 30**
**(P-173)(1175), 5 fevrier 1983**

(73) Titulaire: **COMMISSARIAT A L'ENERGIE ATOMIQUE,**
**31/33, rue de la Fédération, F-75015 Paris (FR)**

(72) Inventeur: **Calvet, Jean, 15, rue Dussoubs, F-75002 Paris**
**(FR)**
Inventeur: **Cavan, Jean-Claude, 31, rue Leroyer,**
**F-94300 Vincennes (FR)**
Inventeur: **Thevenin, Jean-Claude, 54, rue de**
**Villacoublay, F-78140 Velizy (FR)**
Inventeur: **Fievet, Alain, 2, rue des Charmeuses,**
**F-92370 Chaville (FR)**

(74) Mandataire: **Mongrédien, André et al, c/o**
**BREVATOME 25, rue de Ponthieu, F-75008 Paris (FR)**

## Description

La présente invention a pour objet un procédé permettant de réaliser un conduit de lumière multipoints et permettant notamment de lui donner une forme particulière.

Les conduits de lumière multipoints considérés sont constitués de faisceaux de fibres optiques ordonnées. Ils sont principalement utilisés pour le transport d'images, chaque fibre optique transportant un point élémentaire de ces images.

Ces faisceaux de fibres ordonnées présentent de nombreuses applications. En particulier, ils peuvent être utilisés dans le domaine de la médecine et notamment pour l'endoscopie, associés avec une optique d'entrée. Ils peuvent aussi être utilisés dans les domaines de l'électronique et de la visualisation et notamment sous la forme de galettes de couplage optique utilisées par exemple pour les corrections de courbure d'images afin d'obtenir une image plane à partir d'un écran cathodique ou pour assurer la liaison entre un écran phosphorescent plan et la photocathode courbe d'un amplificateur d'images.

Ces conduits de lumière multipoints peuvent suivant leurs formes, outre le transport d'images, servir à l'agrandissement ou la réduction d'images. Sont connus, des réducteurs ou agrandisseurs d'images constitués de fibres optiques ordonnées présentant la forme d'un faisceau conique dont le diamètre d'entrée et le diamètre de sortie caractérisent le grandissement ou la réduction de ces dispositifs.

Les différents types de conduits de lumière multipoints, décrits ci-dessus, sont généralement réalisés avec des fibres optiques en verre ou en silice, matériaux présentant de bonnes caractéristiques de transmission optique (transparence). En revanche, ces fibres optiques présentent l'inconvénient d'être chères, lourdes et relativement peu flexibles.

Ces conduits de lumière connus en fibres de verre sont généralement réalisés soit directement par un assemblage de fibres optiques ordonnées suivi d'un compactage à chaud et sous pression, soit par un assemblage de faisceau élémentaires de fibres optiques obtenus par des étirages successifs.

Ces procédés de fabrication de conduits de lumière présentent un certain nombre d'inconvénients et en particulier une mise en œuvre relativement complexe et coûteuse. Par exemple, l'utilisation de fibres de verre implique une température de travail élevée, supérieure à 600°C; lors du compactage sous pression, entre les deux parties d'un moule, des difficultés apparaissent à la jonction entre ces deux parties; pour la fabrication de réducteurs d'images, on est contraint d'étirer un faisceau et de prélever un tronçon de cône d'étirage. Par ailleurs, ces procédés limitent considérablement les applications des conduites de lumière multipoints obtenus.

Par ailleurs, il est connu du document «Patents Abstracts of Japan», vol. 7, n° 30, p. 173 (1175) 5 février 1983 une méthode de polissage de l'extrémité d'une fibre optique plastique obtenue par étirage et présentant la faculté de grossir en diamètre sous l'effet d'un chauffage. Cette méthode consiste à couper l'extrémité de la fibre et à approcher cette extrémité d'une source de chauffage. Ce chauffage engendre un gonflement diamétral de l'extrémité de la fibre et la libération des contraintes mécaniques introduites dans ladite extrémité lors de la coupe.

La présente invention a justement pour objet un procédé de réalisation de conduits de lumière multipoints permettant de remédier aux différents inconvénients donnés ci-dessus. Elle permet notamment de réaliser des conduits de lumière de façon simple et peu coûteuse pouvant servir, outre au transport d'images, à l'agrandissement ou à la réduction d'images.

Selon l'invention, le procédé de fabrication d'un conduit de lumière multipoints se caractérise en ce que l'on dispose à l'intérieur d'un moule un faisceau de fibres optiques en matière plastique, parallèles entre elles et adjacentes, comprenant chacune un coeur et une gaine optique, chacune de ces fibres ayant été réalisé préalablement par une opération d'étirage et présentant la faculté de grossir en diamètre sous l'effet d'un chauffage, et que l'on élève la température de l'ensemble moule-faisceau de façon homogène afin d'augmenter le diamètre des fibres optiques jusqu'à ce que ces fibres remplissent tout l'intérieur du moule, le faisceau de fibres ainsi traité formant le conduit de lumière multipoints.

Le procédé de l'invention est basé sur l'une des propriétés physiques de certaines fibres optiques en matière plastique dont le procédé de fabrication comporte une opération d'étirage, des fibres obtenues par étirage à partir d'une préforme par exemple.

En effet, les matières plastiques ne sont pas des produits à point de fusion franc et leurs viscosité varie suivant une large gamme de température. En particulier, lors de l'étirage des matières plastiques constituant les fibres optiques, au cours de leur fabrication, la structure moléculaire des matières plastiques, lors du refroidissement, se fige dans une structure étirée. Cet effet peut être plus ou moins accentué suivant les conditions de fabrication des fibres optiques et en particulier de la température d'étirage la plus basse utilisée.

Cette structure moléculaire étirée permet de donner aux fibres optiques propriétés mécaniques et notamment des propriétés de souplesse.

Les inventeurs ont mis en évidence le fait que cette structure moléculaire étirée a tendance à reprendre sa forme première (c'est-à-dire avant étirage), lors d'un chauffage suffisant des matières plastiques de ces fibres, entraînant un gonflement diamétral desdites fibres, lié à un raccourcissement de celles-ci. C'est cette propriété de certaines fibres optiques plastiques que l'on utilise dans l'invention.

Comme fibres optiques en matière plastique, présentant la faculté de grossir en diamètre lorsqu'on les chauffe, on peut notamment citer des fibres optiques comportant une gaine optique en polyacétate de vinyle et un coeur en polystyrène. Ces fibres optiques peuvent être obtenus par étirage à des températures relativement élevées et en particulier voisines de 190°C.

De telles fibres optiques en matière plastique ainsi que leurs procédé de fabrication par étirage ont été décrits dans la demande de brevet français FR-A-2 533 709 déposée le 23 septembre 1982 au nom du demandeur.

Selon l'invention, les fibres optiques utilisées peuvent être dépourvues de gaine mécanique de protection.

Par ailleurs, selon l'application envisagée, le procédé de l'invention peut comprendre une étape supplémentaire consistant à démouler le faisceau de fibres optiques plastiques obtenu après l'étape de montée en température.

Si l'on désire réaliser des galettes de couplage optique on peut, selon l'invention, après le démoulage du faisceau de fibres optiques traité, effectuer un tronçonnage de ce faisceau selon une direction perpendiculaire audit faisceau pour former les galettes.

Si l'on désire réaliser un conduit de lumière multipoints permettant le transport d'images selon un grandissement un, on peut, selon l'invention, utiliser un moule comportant un évidement de forme cylindrique ayant un diamètre constant.

Si l'on désire réaliser des conduits de lumière multipoints permettant en plus du transport d'images, l'agrandissement ou la réduction d'images, on peut selon l'invention utiliser un moule comportant un évidement de forme cylindrique ayant un diamètre variable et notamment un moule comportant un évidement présentant une partie tronconique.

Selon l'invention, les différents conduits de lumière multipoints cités précédemment peuvent présenter des propriétés fluorescentes ou scintillantes.

A cet effet, on utilise des fibres optiques en matière plastique dont le matériau de coeur contient des produits dopants scintillants ou fluorescents. De tels conduits de lumière peuvent notamment être utilisés pour la détection et/ou la localisation de particules.

D'autres caractéristiques et avantages de l'invention ressortiront mieux de la description qui va suivre, donnée à titre illustratif et non limitatif, en référence aux figures annexées dans lesquelles:

la figure 1 représente schématiquement un conduit de lumière multipoints obtenu selon le procédé de l'invention servant à la fois au transport d'images et au grandissement ou à la réduction d'images, et

la figure 2 représente schématiquement un conduit de lumière multipoints obtenu selon le procédé de l'invention présentant la forme d'un «oeil de mouche».

Le procédé de fabrication d'un conduit de lumière selon l'invention consiste tout d'abord à utiliser un faisceau de fibres optiques ordonnées en matière plastique obtenues par étirage à partir d'une préforme; ces fibres optiques sont disposées parallèlement entre elles et de façon adjacente. Comme fibres optiques on peut utiliser par exemple celles décrites dans la demande de brevet français, citée précédemment; ces fibres comprennent notamment une gaine optique réalisée en acétate de polyvinyle et un coeur en polystyrène.

Lorsque les fibres optiques utilisées sont munies d'une gaine mécanique de protection, celles-ci peuvent, selon l'invention, être dénudées sur toute ou partie de leur longueur.

Après ce dénudage des fibres optiques, le faisceau de fibres peut être introduit dans un moule. Ensuite, selon l'invention, on élève la température de l'ensemble moule-faisceau de fibres, de façon homogène, afin d'augmenter le diamètre des fibres optiques jusqu'à ce que ces fibres occupent tout le volume qui leur est offert. En particulier, ces fibres optiques chauffées remplissent tout l'intérieur du moule et notamment les vides optiques présents au départ entre les fibres optiques de forme ronde, conduisant ainsi dans la plupart des cas à l'obtention d'un conduit de lumière multipoints comportant des fibres optiques de section hexagonale disposées en nid d'abeille.

Dans le cas des fibres optiques en matière plastique comportant une gaine en polyacétate de vinyle et un coeur en polystyrène obtenues par étirage à une température de l'ordre de 190°C, le remplissage de tout le moule et l'obtention de la forme hexagonale des fibres optiques peuvent être obtenus en élevant la température, de façon homogène, à environ 130-140°C.

L'élévation en température peut se faire à l'aide d'un appareil de type classique (four par exemple) par chauffage direct du moule contenant les fibres optiques.

L'étape suivante du procédé de l'invention consiste à réaliser un démoulage du conduit de lumière multipoints obtenu.

Le procédé de l'invention permet d'obtenir des conduits de lumière multipoints servant au transport d'images et présentant un grandissement un; ceci peut être réalisé en utilisant un moule de forme tubulaire, c'est-à-dire un moule comportant un évidement de forme cylindrique ayant un diamètre constant.

Selon l'invention, il est possible de réaliser un tronçonnage du conduit de lumière multipoints obtenu selon une direction perpendiculaire au faisceau de fibres constituant ce conduit de façon à former des galettes de couplage optique de faible épaisseur pouvant être utilisées dans le domaine de l'électronique et de la visualisation.

Le procédé selon l'invention peut aussi permettre de réaliser des réducteurs ou agrandisseurs d'images. Ceci peut être obtenu en utilisant un moule comportant un évidement de forme cylindrique ayant un diamètre variable, et en particulier un évidement de forme tronconique, compte tenu du fait que les fibres optiques en matière plastique chauffée peuvent remplir tout l'espace qui leur est offert par une dilatation en diamètre de ces fibres.

Bien entendu, le gonflement des fibres optiques plastiques en diamètre est limité. Par exemple, dans le cas de fibres optiques comportant une gaine en polyacétate de vinyle et un coeur en polystyrène obtenus par étirage à 190°C, il est possible d'obtenir un accroissement des fibres en diamètre d'un facteur trois par un chauffage homogène vers 140°C. Il est à noter que ce gonflement des fibres s'accompagne d'un raccourcissement en longueur proportionnel au gonflement; pour un gonflement diamétral d'un facteur trois, on obtient un raccourcissement d'un facteur neuf.

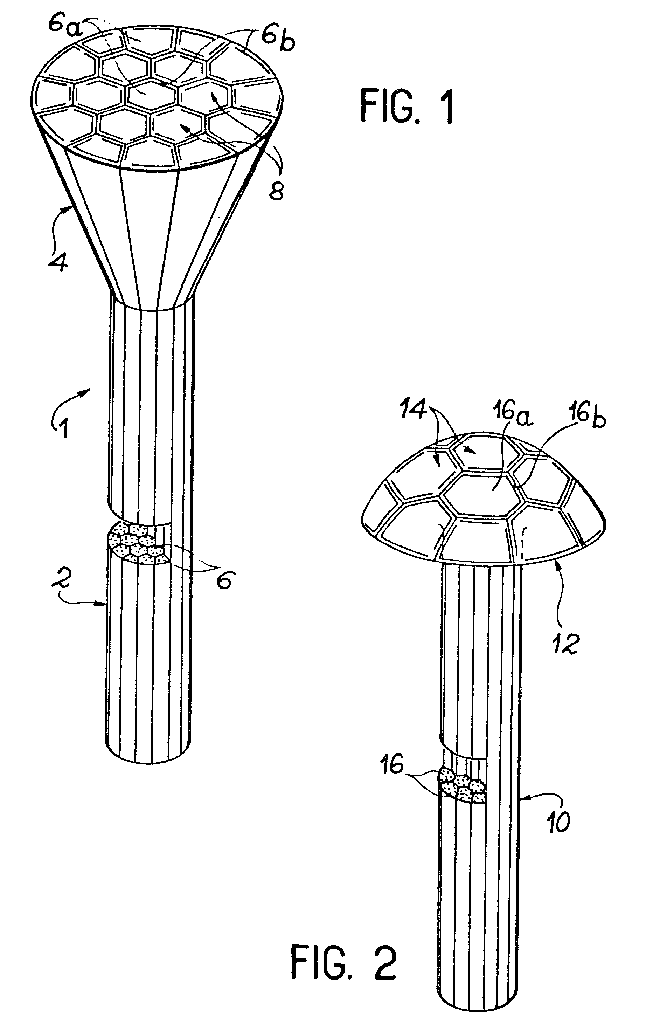

Du fait du principe même du procédé de l'invention, il est possible d'obtenir, comme représenté sur la figure 1, un conduit de lumière multipoints combinant à la fois un transport d'images avec un grandissement un ainsi qu'un agrandissement ou une réduction de ces images et ce sans interruption des fibres optiques. Le conduit de lumière de référence générale 1 comporte une partie cylindrique 2 de diamètre constant, permettant le transport d'images avec un grandissement un, et une partie tronconique 4, solidaire de la partie 2, permettant l'agrandissement ou la réduction d'images. Les fibres optiques plastiques 6, comportant un coeur 6a et une gaine optique 6b, constituant ce conduit de lumière présentent une forme hexagonale 8 en nid d'abeilles obtenue conformément au procédé de l'invention.

Avec un moule comportant un évidement de forme cylindrique ayant un diamètre variable, il est aussi possible de réaliser, comme représenté sur la figure 2, un «oeil de mouche», c'est-à-dire un conduit de lumière multipoints qui comprend une partie cylindrique 10 de diamètre constant et une partie 12 en forme de demi-sphère, présentant, comme un «oeil de mouche», des facettes 14 de forme hexagonale et jointives. Ce conduit de lumière est formé de fibres optiques plastiques 16 ayant un coeur 16a et une gaine optique 16b. Il peut être utilisé pour l'observation grossière des déplacements d'une source lumineuse dans un angle solide de $2\pi$, ou pour l'éclairage dans un angle solide de $2\pi$, à partir d'une source lumineuse émettant dans l'axe du faisceau de fibres cylindrique, d'une source laser par exemple.

Selon l'invention, il est aussi possible de réaliser des conduits de lumière multipoints, de forme quelconque, présentant des propriétés luminescentes ou fluorescentes. A cet effet, on utilise des fibres optiques en matière plastique dont le matériau de coeur contient des éléments dopants fluorescents ou scintillants comme par exemple le composé connu sous l'abréviation de butyl-PBD ou celui connu sous l'abréviation diméthyl-POPOP tels que décrit dans la demande de brevet français citée précédemment. Les conduits de lumière peuvent notamment être utilisés pour la détection et/ou localisation de particules.

Le procédé de l'invention permet d'obtenir des conduits de lumière multipoints de toutes les formes possibles et imaginables par simple gonflement de fibres optiques en matière plastique dans un volume prédéterminé, grâce à une étape de chauffage et ce, sans compactage desdites fibres comme dans les procédés de l'art antérieur. Ce procédé présente l'avantage d'une mise en œuvre simple et peut coûteuse contrairement à certains procédés de l'art antérieur.

On peut par exemple réaliser un conduit de lumière à plusieurs points alignés en introduisant un ruban formé de fibres juxtaposées selon une seule couche dans un moule à section rectangulaire et en élevant la température; dans ce cas, les fibres prennent une section carrée ou rectangulaire.

## Revendications

1. Procédé de fabrication d'un conduit de lumière multipoints (1), caractérisé en ce que l'on dispose à l'intérieur d'un moule un faisceau de fibres optiques (6, 16) en matière plastique, parallèles entre elles et adjacentes et comprenant chacune un coeur (6a, 16a) et une gaine optique (6b, 16b), chacune se ces fibres (6, 16) ayant été réalisée préalablement par une opération d'étirage, et présentant la faculté de grossir en diamètre sous l'effet d'un chauffage, et en ce que l'on élève la température de l'ensemble moule-faisceau de façon homogène afin d'augmenter le diamètre des fibres optiques jusqu'à ce que ces fibres (6, 16) remplissent tout l'intérieur du moule, le faisceau de fibres optiques ainsi traité formant le conduit de lumière multipoints (1).

2. Procédé de fabrication selon la revendication 1, caractérisé en ce que les fibres optiques (6, 16) sont dépourvues de gaine mécanique.

3. Procédé selon l'une quelconque des revendications 1 et 2, caractérisé en ce qu'il comprend une étape supplémentaire consistant à démouler le faisceau de fibres optiques (6) traité.

4. Procédé selon la revendication 3, caractérisé en ce que l'on réalise, après le démoulage du faisceau de fibres optiques (6, 16) traité, un tronçonnage de ce faisceau selon une direction perpendiculaire audit faisceau afin de former des galettes de couplage optique.

5. Procédé selon l'une quelconque des revendications 1 à 4, caractérisé en ce que les fibres optiques (6, 16) comportent une gaine optique (6b, 16b) en acétate de polyvinyle et un coeur (6a, 16a) en polystyrène.

6. Procédé selon la revendication 5, caractérisé en ce que le coeur des fibres contient des produits dopants scintillants ou florescents.

7. Procédé selon l'une quelconque des revendications 1 à 6, caractérisé en ce que le moule comporte un évidement de forme cylindrique ayant un diamètre constant.

8. Procédé selon l'une quelconque des revendications 1 à 6, caractérisé en ce que le moule comporte un évidement de forme cylindrique ayant un diamètre variable.

9. Procédé selon la revendication 8, caractérisé en ce que le moule comporte un évidement présentant une partie tronconique.

## Patentanspüche

1. Herstellungsverfahren für einen Vielpunktelichtleitkörper (1), dadurch gekennzeichnet, dass man im Innern einer Form ein Bündel aus optischen Fasern (6, 16) aus Plastikmaterial anordnet, die untereinander parallel und benachbart sind und jeweils einen Kern (6a, 16a) und eine optische Umhüllung (6b, 16b) aufweisen, wobei jede dieser Fasern (6, 16) zuvor durch einen Ziehvorgang hergestellt worden ist und die Fähigkeit besitzt, unter dem Einfluss einer Erwärmung im Durchmesser zuzunehmen, und dass man die Temperatur der Form/Bündel-Anordnung homogen erhöht, um den Durchmesser der optischen Fasern zu vergrössern, bis diese Fasern (6, 16) den gesamten Innenraum der Form füllen, so dass das so behandelte Bündel aus optischen Fasern den Vielpunktelichtleitkörper bildet.

2. Herstellungsverfahren nach Anspruch 1, dadurch gekennzeichnet, dass die optischen Fasern (6, 16) frei von mechanischer Umhüllung sind.

3. Verfahren nach einem der Ansprüche 1 und 2, dadurch gekennzeichnet, dass es einen zusätzlichen Schritt aufweist, der darin besteht, das behandelte Bündel aus optischen Fasern (6) aus der Form herauszunehmen.

4. Verfahren nach Anspruch 3, dadurch gekennzeichnet, dass man nach dem Herausnehmen des behandelten Bündels aus optischen Fasern (6, 16) das Bündel in einer Richtung senkrecht zum Bündel in Stücke schneidet, um optische Kopplungsscheiben zu bilden.

5. Verfahren nach einem der Ansprüche 1 bis 4, dadurch gekennzeichnet, dass die optischen Fasern (6, 16) eine optische Umhüllung (6b, 16b) aus Polyvinylacetat und einen Kern (6a, 16a) aus Polystyrol aufweisen.

6. Verfahren nach Anspruch 5, dadurch gekennzeichnet, dass der Kern der Fasern szintillierende oder fluoreszierende Dotierungsprodukte enthält.

7. Verfahren nach einem der Ansprüche 1 bis 6, dadurch gekennzeichnet, dass die Form einen zylindrischen Hohlraum aufweist, der einen gleichförmigen Durchmesser hat.

8. Verfahren nach einem der Ansprüche 1 bis 6, dadurch gekennzeichnet, dass die Form einen zylindrischen Hohlraum aufweist, der einen variablen Durchmesser hat.

9. Verfahren nach Anspruch 8, dadurch gekennzeichnet, dass die Form einen Hohlraum aufweist, der einen kegelstumpfförmigen Abschnitt hat.


**Claims**

1. Process for the production of a multipoint light guide (1), characterized in that within a mould is arranged a bundle of optical fibres (6, 16) made from a plastics material, having a core (6a, 16a) and an optical sheat (6b, 16b), each of whose fibres (6, 16) has previously been produced by a drawing operation and being able to increase in diameter under the effect of heating, and in that the temperature of the mould-bundle assembly is homogeneously increased in order to increase the diameter of the optical fibres (6, 16) until they occupy the entire interior of the mould, the bundle of fibres treated in this way forming the multipoint light guide (1).

2. Production process according to claim 1, characterised in that the optical fibres (6, 16) do not have a mechanical covering.

3. Process according to either of the claims 1 and 2, characterized in that it comprises a supplementary stage of demoulding the treated bundle of optical fibres (6).

4. Process according to claim 3, characterized in that, following the demoulding of the treated bundle of optical fibres (6, 16), this bundle is cut in a direction perpendicular thereto, in order to form optical coupling wafers.

5. Process acording to any one of the claims 1 to 4, characterized in that the optical fibres (6, 16) have a polyvinyl acetate optical sheat (6b, 16b) and a polystyrene core (6a, 16a).

6. Process according to claim 5, characterized in that the fibre core contains scintillating or fluorescent doping products.

7. Process according to any one of the claims 1 to 6, characterized in that the mould has a cylindrical recess having a constant diameter.

8. Process according to any one of the claims 1 to 6, characterized in that the mould has a cylindrical recess with a variable diameter.

9. Process according to claim 8, characterized in that the mould has a recess with a frustum-shaped portion.

FIG. 1

FIG. 2